# DEMANDE DE BREVET EUROPEEN

(11) **EP 0 688 884 A1**
(43) Date de publication de la demande: **27.12.1995**
(21) Numéro de dépôt: 95401453.6
(22) Date de dépôt: 20.06.1995
(51) Int. Cl.: C23C 2/02

(54) **Procédé et dispositif de recuit d'une bande métallique et perfectionnement aux lignes de galvanisation à chaud en continu en faisant application**

(30) Priorité: 22.06.1994 FR 9407648
(71) Demandeur: FABRIQUE DE FER DE MAUBEUGE, F-59720 Louvroil (FR)
(72) Inventeur: Bretez, Michel, F-59750 Seignies (FR); Viellard, Laurence, F-59600 Maubeuge (FR)
(74) Mandataire: Robert, Jean-Pierre

(57) **Abrégé**

Procédé de recuit d'une bande métallique défilant en continu selon lequel on échauffe rapidement la bande et on la maintient à une température déterminée de palier, caractérisé en ce que l'échauffement initial est réalisé jusqu'à atteindre une température supérieure à la température de palier pour former un pic initial (12) de température au début du cycle thermique.

## Description

La présente invention concerne les lignes de galvanisation au trempé à chaud ("hot dip") et plus particulièrement la section de la ligne dans laquelle on applique avant galvanisation, un traitement thermique au produit pour le recristalliser et le désoxyder.

Dans ce type d'installation, le revêtement d'un substrat métallique, par exemple une bande de tôle, est obtenu en faisant circuler en continu cette bande dans un bain de zinc ou d'alliage de zinc fondu. La bande issue d'une bobine placée dans un poste de déroulement, subit de nombreux traitements de préparation avant de pénétrer dans le bain et, à la sortie du bain, est essorée puis refroidie avant d'être reconditionnée en bobine dans un poste d'enroulement.

Les traitements préalables à l'immersion comprennent une phase de décapage dégraissage réalisée en général par voie chimique, et une préparation thermique destinée à d'une part recuire la bande qui est écrouie par le laminage à froid qu'elle a subi, d'autre part éliminer toutes traces d'oxydation et enfin la porter à une température compatible avec celle du bain d'alliage de zinc.

La section de traitement thermique et de désoxydation de la bande est certainement celle de la ligne la plus complexe et dont la mise au point et la régulation de fonctionnement sont les plus délicates.

En effet les caractéristiques des aciers et leur composition, notamment en ce qui concerne la nature et la concentration des impuretés formant le substrat à galvaniser, sont très variables à l'entrée d'une même ligne de galvanisation. Or la longueur du cycle thermique classique d'une opération de recuit est dépendant très largement de ces caractéristiques, même si l'allure générale de ce cycle est toujours semblable.

Pour pouvoir correctement recuire une bande métallique avant galvanisation il convient de l'échauffer jusqu'aux environs de 750°C puis de la maintenir à cette température pendant un temps déterminé qui est bien entendu fonction des caractéristiques de l'acier et du format de la bande. Or pour une installation donnée le temps de palier n'est pas flexible puisqu'il est égal au temps de séjour dans le four dont la longueur est fixe. Il n'est pas concevable de jouer sur le seul paramètre possible, à savoir la vitesse de défilement de la bande car à cette vitesse sont reliés de nombreux autres paramètres de fonctionnement de la ligne, à l'endroit du bain et des dispositif d'essorage et de refroidissement.

Afin donc de tenter d'obtenir le meilleur recuit possible sur une installation existante, compte tenu de la dispersion au fil de la bande des caractéristiques du produit traité en continu, les industriels jouent sur la température en "poussant" la chauffe. Cette manière de procéder n'est pas satisfaisante car elle induit également de nombreuses perturbations dans les autres postes de la ligne. La plus importante d'entre elles résulte du fait que la bande est trop chaude lorsqu'elle entre dans le bain d'alliage de zinc. La métallurgie qui s'ensuit est alors profondément affectée notamment en ce qui concerne la croissance des alliages intermétalliques qui altèrent la qualité du revêtement et son adhérence au substrat lors du travail de formage qui suit la galvanisation. Ainsi en espérant une recristallisation plus profonde et plus homogène du substrat, afin d'adapter le produit aux déformations plastiques qu'il devra subir par la suite, on obtient un revêtement de moins bonne qualité en regard de ces mêmes déformations plastiques. Enfin, l'action sur la température possède elle-même des limites tenant à la conduite de la ligne, et il n'est pas certain qu'une ligne de galvanisation existante puisse délivrer des produits de qualité constante quels que soient les substrats métalliques qui lui sont fournis.

Il existe donc un problème aujourd'hui non résolu en ce qui concerne, notamment dans une ligne de galvanisation au trempé d'un produit défilant en continu, la recristallisation par recuit du substrat métallique à revêtir et plus généralement cette recristallisation à la sortie d'une unité de laminage à froid.

On mentionnera à ce propos le document US 4 379 547 qui illustre bien les problèmes liés à un recuit en continu à vitesse élevée. La plus grande part de ces problèmes tient au peu de souplesse d'un four thermique destiné à recuire c'est-à-dire qui, dans une première phase doit provoquer une élévation en température rapide du produit et ensuite maintenir un palier de température relativement précis. La totalité de la littérature sur le sujet de recuit préconise un tel cycle thermique.

Or les études et expériences conduites par les inventeurs dans le domaine de l'isotropie cristallographique des aciers écrouis et recuits ont permis de découvrir qu'il pouvait exister un autre cycle thermique pour recuire une bande d'acier écroui (par exemple par laminage à froid) c'est-à-dire pour faire recouvrer à la structure cristalline de la bande, anisotrope du fait du traitement mécanique intense qu'elle a subi lors du laminage à froid, une isotropie qui est bien entendu le signe d'une isotropie mécanique favorable à l'exécution d'opération de formage (pliage, emboutissage...).

La présente invention a donc pour premier objet un procédé de recristallisation en continu d'une bande métallique écrouie notamment par laminage à froid consistant à appliquer à cette bande un traitement thermique comportant un pic initial de température suivi d'une température de palier.

Le pic initial a pour fonction de fournir rapidement à la bande une énergie suffisante pour amorcer la libération des forces intercristallines intenses que la bande a emmagasinées au cours de l'écrouissage ou du laminage à froid et qui sont d'autant plus importantes que le taux de réduction lors du laminage est important. Ainsi on crée un amorçage homogène des opérations de recristallisation contrairement au cycle classique de recuit où cette recristallisation ne commence pas de manière homogène notamment en présence d'impuretés intergranulaires qui retardent cet amorçage à l'endroit où elles sont présentes. Le temps de palier peut alors être diminué par rapport au temps classiquement nécessaire, toutes choses égales par ailleurs.

Le second objet de l'invention concerne les moyens pour parvenir à la création de ce cycle thermique avec pic initial. Ceux-ci comportent un dispositif de chauffage par induction à flux transverse. L'intérêt du chauffage par induction à flux transverse réside dans sa possibilité de chauffer des matériaux amagnétiques ou des matériaux ferromagnétiques au-delà du point de Curie. Son principe est bien connu : deux inducteurs (au moins) comprenant chacun des conducteurs d'induction en forme par exemple de serpentin, sont disposés distants l'un de l'autre en parallèle et la bande métallique à chauffer circule entre eux. L'excitation des bobines engendre un flux magnétique traversant perpendiculairement les faces de la bande métallique, et engendre des courants induits dans le plan de la bande qui l'échauffent par effet Joule. La distribution des courants induits dans la bande est contrôlée par des structures polaires spéciales pour obtenir un chauffage uniforme en relation avec le déplacement de la bande entre les pôles. Ces moyens de chauffage sont parfaitement adaptés à l'invention car ils permettent une élévation de température extrêmement rapide donc des vitesses élevées de défilement de la bande et n'ont aucune inertie thermique si bien que la régulation de leur fonctionnement est aisée.

Le troisième objet de l'invention est une application directe des objets précédents, à savoir un perfectionnement apporté aux lignes de galvanisation à chaud au trempé. Ce perfectionnement consiste en une section de traitement thermique en amont du bain de galvanisation comprenant, à l'entrée d'un four à atmosphère contrôlée un dispositif de chauffage par induction transverse permettant un amorçage homogène de la recristallisation de la bande quelles que soient les caractéristiques métallurgiques de la bande à galvaniser. Cette disposition permet d'une part de rendre la ligne de galvanisation adaptée à recevoir des produits de caractéristiques dispersées (dûes à la présence de corps résiduels dans les aciers dits électriques notamment) sans avoir à devoir chauffer excessivement et trop longtemps la bande pour obtenir un recuit acceptable, d'autre part d'introduire la bande dans le bain à une température mieux adaptée à l'opération de galvanisation et en troisième lieu de rendre indépendantes les opérations de recuit et celles de désoxydation et donc d'agir de manière séparée sur les paramètres spécifiques de chacune de ces opérations.

Les objets de l'invention seront décrits ci-après en référence aux dessins annexés dans lesquels :
- la figure 1 est un schéma d'une ligne de galvanisation en continu au trempé comportant une section de traitement thermique mettant en oeuvre le procédé de recristallisation de l'invention,
- la figure 2 est un graphe schématique du cycle de température de recuit dans le procédé selon l'invention.

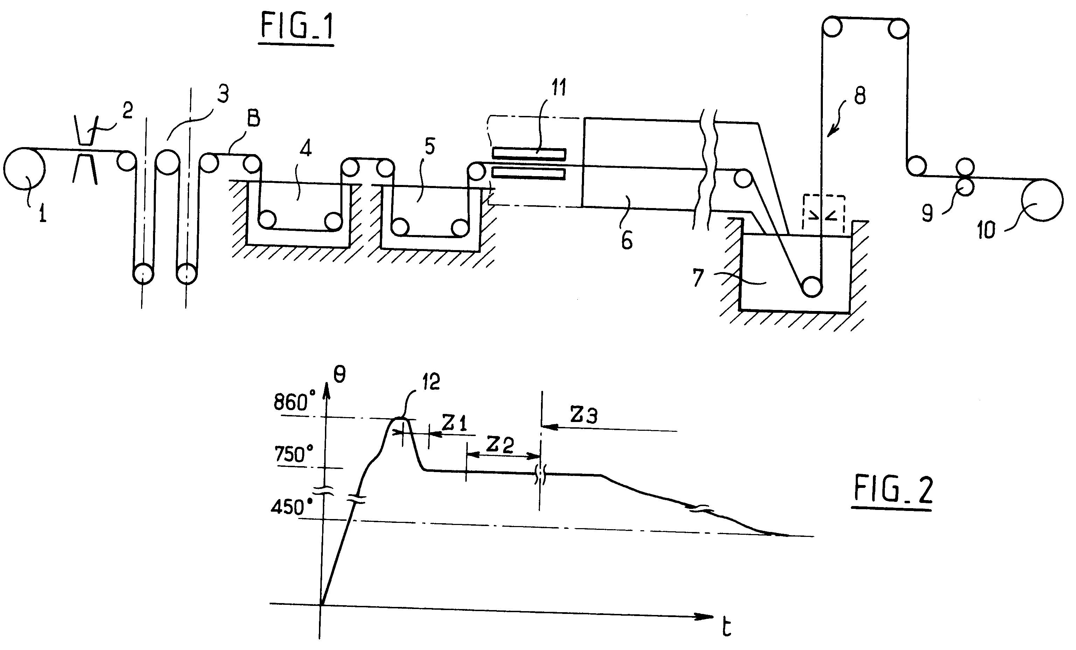

La ligne de galvanisation d'une bande B représentée schématiquement à la figure 1 comporte de manière connue
- un poste de débobinage 1 de bobines de bande métallique,
- un poste 2 de raccordement de deux extrémités de bande,
- un accumulateur 3 permettant de constituer une réserve de bande nécessaire au fonctionnement du poste 2 sans nuire au défilement continu de la bande,
- au moins un poste 4, 5 de traitement de surface pour dégraisser et décaper la bande B,
- une section de traitement thermique 6 comprenant un four à atmosphère contrôlée qui, classiquement, permet dans plusieurs zones successives, de recuire la bande, de la désoxyder et de la porter à une température déterminée pour son entrée dans un bain d'alliage (par exemple d'alliage de zinc),
- une cuve 7 d'alliage de zinc fondu avec ses équipements périphériques (goulotte d'introduction sous atmosphère neutre, dispositif d'essorage à l'air ou à l'azote...),
- une zone 8 de refroidissement dans laquelle cristallise l'alliage de revêtement (avec si besoin est des équipements spécifiques pour contrôler ce refroidissement,
- éventuellement une zone 9 de traitement mécanique de la bande galvanisée (skin pass),
- un poste 10 d'enroulement du produit galvanisé.

A ces équipements classiques, on ajoute selon l'invention une unité 11 de chauffage de la bande en tête de la section de traitement thermique 6 qui comprend des inducteurs à flux transverse grâce à laquelle la bande est portée rapidement à une température nettement supérieure à la température qui régne dans la zone de recuit du four 6. A titre d'exemple la température de recuit établie dans le four 6 est telle que la bande est portée à environ 750°C. L'unité 11 de chauffage par induction permettra de porter la bande à une température de l'ordre de 820 à 900°C avant qu'elle ne pénètre dans le four 6.

Cette unité 11 pourra comprendre si nécessaire un premier étage d'inducteurs à flux longitudinal pour amorcer la montée en température de la bande en-dessous du point de Curie.

Le cycle thermique de la bande à l'intérieur de l'ensemble de la section de traitement thermique 11, 6 est illustré par le graphe de la figure 2. On voit sur ce graphe un pic initial 12 de température atteignant 860°C suivi d'un palier à environ 750°C puis une décroissance de la température jusqu'à 450°C environ c'est-à-dire la température de la bande à l'entrée du bain 7. Le refroidissement initial entre 860 et 750° peut être par exemple obtenu dans la zone Z1 d'entrée du four dépourvue d'organe de chauffage. La température de palier sera de préférence maintenue dans une zone Z2 à atmosphère neutre et une zone Z3 suivante du four (de manière connue) pourra contenir une atmosphère réductrice pour désoxyder la bande avant son refroidissement final jusqu'à la température d'entrée dans le bain 7.

On comprend que l'un des avantages principaux du cycle thermique de recuit selon l'invention appliqué à une ligne de galvanisation réside dans la grande facilité à transformer une ligne existante par l'introduction sur le trajet de la bande d'une section de chauffage par induction qui est peu consommatrice de place. Cette unité permet également de simplifier la conduite du four 6 qui peut être plus complètement dédié au traitement réducteur de la bande permettant ainsi d'optimiser ce traitement sans avoir à compromettre avec le traitement de recuit.

Bien entendu, si l'invention trouve une application particulièrement avantageuse dans le domaine de la galvanisation de bandes métalliques en continu, elle est applicable dans d'autres domaines tels que
- recuit continu des produits issus d'un laminage à froid,
- recuit de produits continus autres que produits plats (fils, barres...).

## Revendications

1. Procédé de recuit d'une bande métallique défilant en continu selon lequel on échauffe rapidement la bande et on la maintient à une température déterminée de palier, caractérisé en ce que l'échauffement initial est réalisé jusqu'à atteindre une température supérieure à la température de palier pour former un pic initial (12) de température au début du cycle thermique.

2. Dispositif pour mettre en oeuvre le procédé selon la revendication 1, caractérisé en ce qu'il comporte des moyens (11) de chauffage par induction à flux transverse pour créer le pic initial (12) de température.

3. Application du dispositif selon la revendication 2 à une ligne de galvanisation au trempé en continu d'un substrat métallique en bande (B) comportant un poste de déroulement (1) de bobines de substrat, au moins une section (4,5) de traitement chimique de ce substrat, une section de traitement thermique, une section de galvanisation (7) une section de refroidissement (8) et une section d'enroulement (10) du produit revêtu en forme de bobine, caractérisée en ce que la section de traitement thermique comprend en tête au moins une unité (11) de chauffage du substrat par induction à flux transverse pour échauffer la bande à une température déterminée et au moins un four (6) dans lequel est établie une température inférieure à la température du produit issu de l'unité de chauffage par induction.
